# EUROPEAN PATENT APPLICATION

(11) **EP 1 238 581 A2**
(43) Date of publication of application: **11.09.2002**
(21) Application number: 02075671.4
(22) Date of filing: 19.02.2002
(51) Int. Cl.: A01K 13/00, A01L 15/00, A61D 11/00

(54) **Cleaning apparatus for cattle**

(30) Priority: 09.03.2001 NL 1017558
(71) Applicant: Joz B.V., 1617 KK Westwoud (NL)
(72) Inventor: Elling, Hendrik Jan, 1617 KZ Westwoud (NL)
(74) Representative: Van Breda, Jacobus

(57) **Abstract**

A cleaning device for livestock, in particular for cattle provided with a foot-cleaning device comprising a row or several rows of brushes (3). Said brushes are arranged both with their central axes parallel to the aisle and at right angles thereto. Of the rows of brushes arranged behind one another at least two rows follow in immediate succession which are staggered such that said two rows of brushes arranged behind one another do not have a common central axis. Next to the aisle there are sprayers (14), which during use are directed at the feet of the cattle. Near the end of the aisle a disinfecting device is positioned for the feet of the cattle. Said disinfecting device comprises a grid under which upward directed sprayer members are provided and/or next to the aisle sprayer members are arranged directed at right angles thereto.

The foot-cleaning device comprises fencing for guiding the cattle over a predetermined path. This fence comprises one or more time-activated gates.

The cleaning device also comprises a hide-brushing device (9) for the cattle and a downward directed sprayer above the aisle for an insecticide.

## Description

The invention relates to a cleaning device for livestock, in particular cattle.

There is a need for cleaning cattle on a regular basis, for example, it order to prevent the occurrence of contagious cattle diseases. In Europe, the expedience of taking appropriate measures in this respect is generally accepted and likewise outside Europe the matter is receiving icreasingly more attention.

The object of the invention is to provide such a cleaning device with which it is possible to automatically and regularly clean the cattle.

In its optimal embodiment the cleaning device according to the invention therefore has a number of features that are formulated in the claims.

From NL-C-1009895 a cleaning appliance is known provided with a device for cleaning feet. Such a cleaning device is also described in the not pre-published European patent application EP-A-1 099 373. Especially the feet of the cattle are vulnerable, being a part of the body that is awkward to clean.

The foot-cleaning device according to the invention is characterized in that it comprises at least one row of brushes. These brushes that are arranged in a row, are preferably arranged in parallel and it is further preferred for the brushes to rotate while the cleaning device is in use.

It is noted that DE-U-298 07 717 discloses a cleaning device provided with brushes. However, this relates to a cleaning device for small animals that is not suitable for cattle.

In the arrangement of rotating brushes proposed by the invention, an effective cleaning of the cattle's feet can take place in a simple manner.

The efficiency of this device may be especially improved if the foot-cleaning device comprises an aisle in which a row of brushes, one behind the other, is provided. As the cattle passes through the aisle, which can be arranged to happen on a regular basis, the feet of the cattle will be cleaned at the same time.

To further optimize the cleaning, several rows of brushes may be arranged, both with their central axes parallel to the aisle and at right angles thereto.

The efficacy of this device is further enhanced by the fact that the rows of brushes arranged behind one another comprise at least two rows in immediate succession and staggered, such that said two rows of brushes arranged behind one another do not have a common central axis. In this way the brushes contact the feet of the cattle in such a variety of places that a substantially complete cleaning can take place.

In another aspect of the invention, the cleaning device is characterized in that in or next to the aisle there are sprayers, which during use are directed at the feet of the cattle. This very effectively assists the desired cleaning of the cattle's feet.

It is further desirable that near the end of the aisle a disinfecting device be placed for the feet of the cattle.

This disinfecting device may be conveniently realised such that the same comprises a grid under which sprayer members are provided that spray a disinfectant upward at the cattle's feet.

In yet a further aspect of the invention the foot-cleaning device is characterized in that the same comprises fencing for guiding the cattle over a predetermined path. This ensures that the cattle passing over the aisle will undergo a full treatment so that comprehensive cleaning can be carried out.

This may be further assisted by embodying the cleaning device such that one or more time-activated gates are positioned in the fencing.

A very useful addition to the cleaning device according to the invention is characterized in that the same comprises a hide-brushing device for the cattle. This may conveniently complete the external care of the cattle, in particular in the embodiment that is characterized in that above the aisle the same also comprises a downward directed sprayer for an insecticide.

The invention will now be further elucidated with reference to a non-limiting exemplary embodiment of the cleaning device having preference. This exemplary embodiment must therefore in no way be interpreted as limitation to the protective scope of the claims, but merely serves as explanation for these claims for so far as these require any explanation.

In the drawing
- Figure 1 shows a perspective view of the cleaning device for cattle, and
- Figure 2 shows a cross-section through the cleaning device according to Figure 1, at the line A-A in figure 1.

Similar parts in the figures are identified by identical reference numbers.

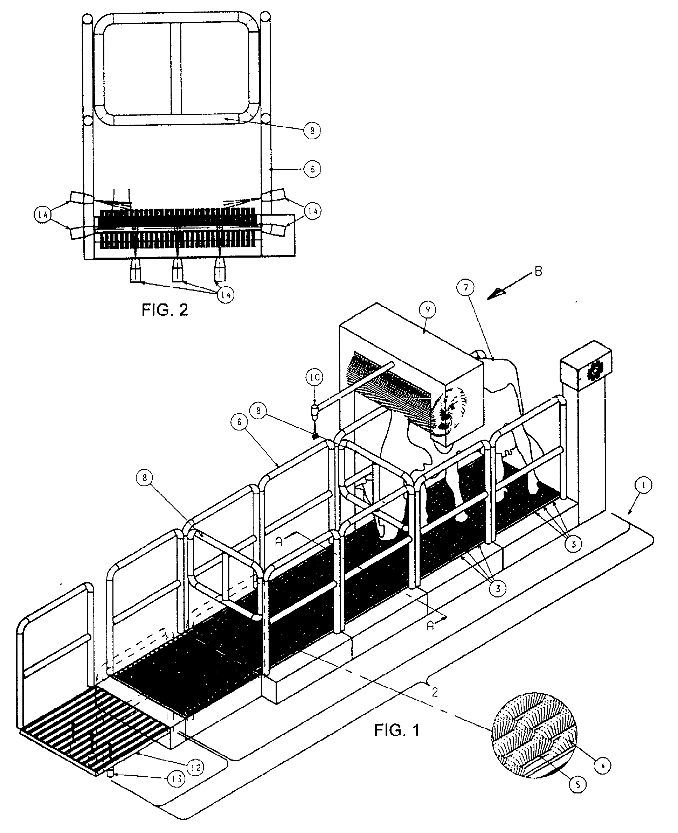

Figure 1 shows the cleaning device (1) according to the invention, which is equipped with a foot-cleaning device (2). Said foot-cleaning device (2) comprises brushes (3) arranged behind one another. The brushes (3) are rotatable and evenly spaced. The figure clearly shows that successive rows of brushes (3) are staggered such that the brushes (3) of successive rows arranged immediately one behind the other do not have a common central axis. See, for example, the brush rows 4 and 5.

The figure further shows that the foot-cleaning device (2) comprises an aisle in the direction of arrow B, that is fenced off with the aid of a fencing (6) for guiding the cattle (7) over a predetermined path. The fencing (6) further comprises one or more time-activated passages (8). The figure further shows that the cleaning device (1) is embodied with a hide-brushing device (9) for the cattle (7) and that a downward directed sprayer (10) for an insecticide is positioned above the aisle.

At the end of the aisle there is a disinfecting device (11) which, as shown in the figure, is preferably embodied as a grid (12) under which upward directed sprayers (13) for a disinfectant are positioned. In addition, there may be sprayers positioned next to the aisle, at right angles thereto, directed at the feet of the passing cattle.

Referring now to Figure 2, it is also shown that in or next to the aisle sprayers (14) may be positioned, which during use are directed at the feet of the cattle (7).

## Claims

1. A cleaning device (1) for livestock, in particular for cattle provided with a foot-cleaning device (2), **characterized in that** the foot-cleaning device comprises at least one row of brushes (3).

2. A cleaning device according to claim 1, **characterized in that** the foot-cleaning device (2) comprises at least one row of parallel arranged brushes (3).

3. A cleaning device according to claim 1 of 2, **characterized in that** the foot-cleaning device (2) comprises an aisle with rows of brushes (3) arranged one behind the other.

4. A cleaning device according to claim 4, **characterized in that** several rows of brushes are arranged both with their central axes parallel to the aisle and at right angles thereto.

5. A cleaning device according to claim 3 or 4, **characterized in that** the rows of brushes (3) arranged behind one another comprise at least two rows (4 and 5) in immediate succession and staggered such that said two rows of brushes arranged behind one another do not have a common central axis.

6. A cleaning device according to one of the preceding claims, **characterized in that** the brushes rotate while the cleaning device is in use.

7. A cleaning device according to one of the preceding claims, **characterized in that** in and/or next to the aisle there are sprayers (14), which during use are directed at the feet of the cattle (7).

8. A cleaning device according to one of the claims 4 - 7, **characterized in that** near the end of the aisle a disinfecting device is positioned for the feet of the cattle (7).

9. A cleaning device according to claim 8, **characterized in that** the disinfecting device (11) comprises a grid (12) under which sprayer members (13) are provided and/or next to the aisle sprayer members arranged at right angles thereto.

10. A cleaning device according to one of the preceding claims, **aharaaterized** in that the foot-cleaning device (2) comprises fencing (6) for guiding the cattle (7) over a predetermined path.

11. A cleaning device according to claim 10, **aharaatarized** in that the fence (6) comprises one or more time-activated gates.

12. A cleaning device according to one of the preceding claims, **characterized in that** the same comprises a hide-brushing device (9) for the cattle (7).

13. A cleaning device according to one of the claims 4-12, **characterized in that** above the aisle the same comprises a downward directed sprayer (10) for an insecticide.
